Europäisches Patentamt

European Patent Office

Office européen des brevets

(19)

(11) Publication number : **0 477 144 A1**

## (12) EUROPEAN PATENT APPLICATION

(21) Application number : **91830358.7**

(22) Date of filing : **28.08.91**

(51) Int. Cl.⁵ : **E04B 1/98,** F16F 7/12, E01D 19/00, E04H 9/02

(30) Priority : **30.08.90 IT 947890**

(43) Date of publication of application : **25.03.92 Bulletin 92/13**

(84) Designated Contracting States : **CH DE ES FR GB GR IT LI**

(71) Applicant : **Carcassi, Marco**
**Via N. Bixio n. 17**
**I-56125 Pisa (IT)**

(72) Inventor : **Carcassi, Marco**
**Via N. Bixio n. 17**
**I-56125 Pisa (IT)**

(74) Representative : **Mannucci, Gianfranco, Dott.-Ing. et al**
**Ufficio Tecnico Ing. A. Mannucci Via della Scala 4**
**I-50123 Firenze (IT)**

(54) **Dissipative device for safeguarding a structure against a dynamic stress.**

(57)   A dissipator device for the reduction of the seismic response of a structure, comprises a tubular member (9) capable of being deformed plastically, dissipating energy, when the structure is subjected to seismic or similar stresses. The tubular member is movable within an interspace (7) formed by a male part or plug (3) and by a female part (1), which interspace has at least one section in which said tubular member undergoes a radial plastic deformation.

EP 0 477 144 A1

Jouve, 18, rue Saint-Denis, 75001 PARIS

# Fig. 2

The invention relates to a dissipator device for the reduction of the seismic response of a structure or for absorbing kinetic energy in order to reduce stresses in case of impact or the like, of the type comprising means for anchoring the device to the structure and a member capable of being deformed plastically, dissipating energy, when the structure is subjected to high stresses of seismic or similar type.

As is known, in order to increase the aseismatic resistance of civil structures such as bridges, thermoelectric power stations and the like, it is common to introduce, at a number of characteristic points of the bearing structure, special devices which are capable of dissipating energy. These dissipating devices (also known as ADAS (Added Damping And Stiffness) elements) basically constitute plastic hinges which, in the event of strong earthquake shocks, are deformed plastically. The plastic deformation of the device dissipates energy, safeguarding the structure against the damage which would result if it were subjected to the same seismic stress in the presence of a rigid or elastic structure and limiting the force transmitted between the two portions of the structure connected by the device to a predetermined value.

The dissipative devices of known type comprise a member, generally made of steel, anchored to two elements of the structure and intended to be deformed first in the elastic range and then in the plastic range, reducing the movements and thus the stresses of the structure to which they are applied. Among the requirements made of these devices, of particular importance is the so-called dissipative efficiency. This efficiency is increased by reducing as much as possible the elastic deformation of the deformable member in favor of the plastic deformation of the same; this is done since the elastic deformation does not dissipate energy and is therefore not useful for the purposes of the protection of the structure in the event of strong seismic shocks.

The normal dissipative devices have a dissipative efficiency around 60-70%. Other dissipative elements exist, which use lead masses which are deformed by drawing and which allow higher efficiency. However, these devices have proven unreliable and difficult to maintain.

The subject of the invention is a dissipative device of the abovementioned type which makes it possible to obtain a high dissipative efficiency, simple maintenance and particularly safe and accurate dimensioning.

These and other aims and advantages, which will appear clear to experts from reading the text which follows, are obtained essentially with a device of the type mentioned, wherein the deformable member is a tubular member which is movable with respect to a male part or plug which enters into said tubular member causing a radial deformation thereof, practically entirely in plastic range. Advantageously, in order to obtain a device which is suitable for use in aseismatic structures, and therefore suitable to undergo reversible deformations, a female part can be provided, which forms which said mail part an interspace wherein the tubular member is deformed. The deformation is reversible and gives rise to a hysteresis cycle with optimum characteristics for use in aseismatic structures, that is to say a hysteresis cycle which is close to a rectangle.

Further advantageous embodiments of the device according to the invention are indicated in the attached dependent claims.

The invention will be understood more clearly by following the description and the attached drawing which shows a non-limiting practical embodiment of said invention. In the drawing,

Fig. 1 shows a schematic exemplary diagram of the behavior of a dissipator device,

Fig. 2 shows a lateral view and partial cross-section of a device,

Fig. 3 shows an enlarged detail,

Fig. 4 shows an application to a bridge,

Fig. 5 shows an improved device,

Figs.6 and 7 show two alternative embodiments of the deformable tubular member, and

Fig. 8 shows a modified embodiment.

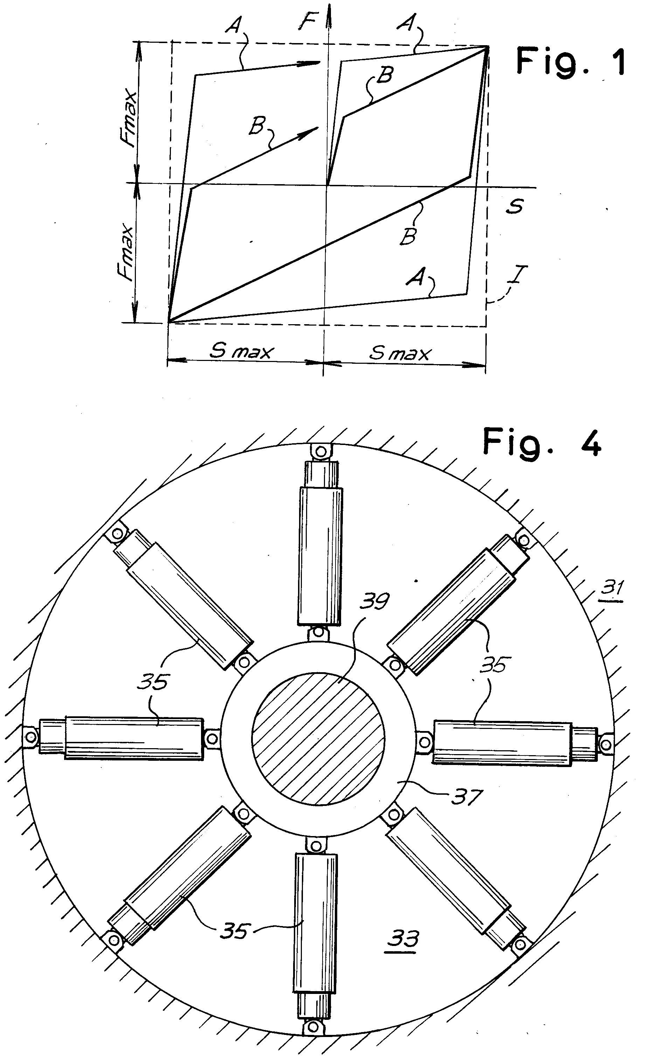

In Fig. 1, an example of a diagram is shown very schematically, which reproduces the characteristics of a dissipator device. In the diagram, there are entered on the abscissas the movements S imposed on the device, and on the ordinates the forces F transmitted by the device itself. The two curves, indicated by A and B, correspond to the behavior of dissipator devices of known type having different mechanical characteristics. I indicates the ideal rectangle which has as its sides the maximum movement Smax and the maximum force Fmax. Dissipative efficiency of a device of the type in question is defined as the ratio between the area enclosed by the curve (A or B) representing the behavior of the real device and the area enclosed by the ideal rectangle I. These areas represent the energies dissipated by the real device and by an ideal device respectively. Since, as appears from the schematic diagram in Fig. 1, a real device of conventional type has an elastic/plastic and not entirely plastic behavior, the efficiency defined above is considerably lower than 100%.

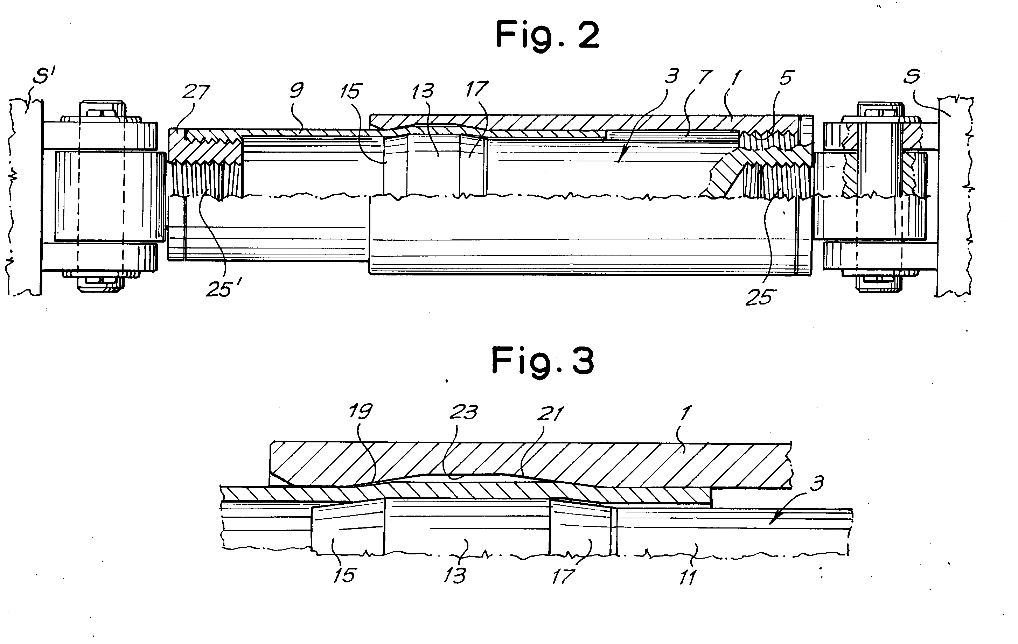

The dissipator device according to the invention is illustrated in Figs 2 and 3. It comprises a tubular or female element 1 of relatively high thickness in order to impart radial resistance. Coaxially with and internally to the female element 1, there extends a plug or male part 3 which is integrally fixed at 5 to said female part 1. Between the female part 1 and the male part 3, an interspace 7 is thus defined, within which a tubular member 9 is developed, which constitutes the actual dissipator member, that is to say the member intended to undergo the plastic deformation.

The plug or male part 3 has a portion 11 with a section of smaller diameter and a portion 13 of greater diameter ending in a portion with frustoconical surface 15 and connected to the portion 11 of smaller diameter by another portion with frustoconical surface 17. In the region of the frustoconical surfaces 15 and 17, the female element 1 has two corresponding frustoconical surfaces 19 and 21 respectively, which connect a portion 23 of greater diameter of the internal surface of the female part 1 to the remaining internal surface of the said female part 1.

The frustoconical surfaces 15, 17, 19, 21 thus define a section of the interspace 7, within which the tubular member 9 is deformed radially. More particularly, as appears from the enlargement in Fig. 3, the tubular member is deformed radially so as to have between the frustoconical surfaces 15, 19 and 17, 21 a greater transverse cross-section.

Fixed to the male part 3 is a hinge element 25 which serves to fix the male/female assembly 1, 3 to the structure, into which the device is inserted, indicated generally by S. Fixed to the tubular element 9, at the end outside the interspace 7, is a threaded sleeve 27, into which there is screwed a hinge element 25′ of similar type to the hinge element 25, in order to fix the tubular element 9 to a point S′ of the structure.

The tubular element 9 and the male/female assembly 1, 3 are made integral at two separate points of the structure S, forming between said two points a plastic hinge. When the structure is stressed by a strong earthquake, the two points connected by the device described above can move in relation to one another as a result of the movement of the tubular member 9 in the interspace 7. This relative movement is possible only when the stress exerted on the device exceeds a given predetermined value and is a function, as well as of the size and the mechanical characteristics of the tubular member 9, of the inclination of the frustoconical surfaces 15, 17, 19, 21 also. Until the stress reaches said predetermined value, the device remains rigid. When, on the other hand, the stress reaches the threshold value, there is a sliding of the tubular member 9 within the interspace 7 with simultaneous plastic deformation of the tubular member itself between the surfaces 15, 19 and the surfaces 17, 21. More particularly, if the relative movement comprises an insertion of the tubular member 9 into the interspace 7, each section of the tubular member - when it penetrates the zone defined by the surfaces 15, 17, 19, 21 - undergoes a first plastic deformation of radial widening of the section caused by the frustoconical surface 15 of the male part 3, and a second plastic deformation of narrowing caused by the frustoconical surface 21 of the female part 1. Conversely, when the tubular member 9 is stressed to leave the interspace 7, each section is first widened by the frustoconical surface 17 of the male part and then narrowed by the frustoconical surface 19 of the female part.

For the purpose of facilitating the deformation of the tubular member 9, the zone of contact between the internal surface of the tubular member 9 and the surface 15 can be slightly staggered in the axial direction in relation to the zone of contact between the frustoconical surface 19 and the external surface of the tubular member itself. In this manner, when the tubular member 9 penetrates the interspace 7, the section which is deformed by contact with the frustoconical surface 15 is free to widen radially, as it is not in contact with the corresponding surface 19 of the female part. The same takes place between the surfaces 17 and 21. This situation is clearly illustrated in the enlargement in Fig. 3.

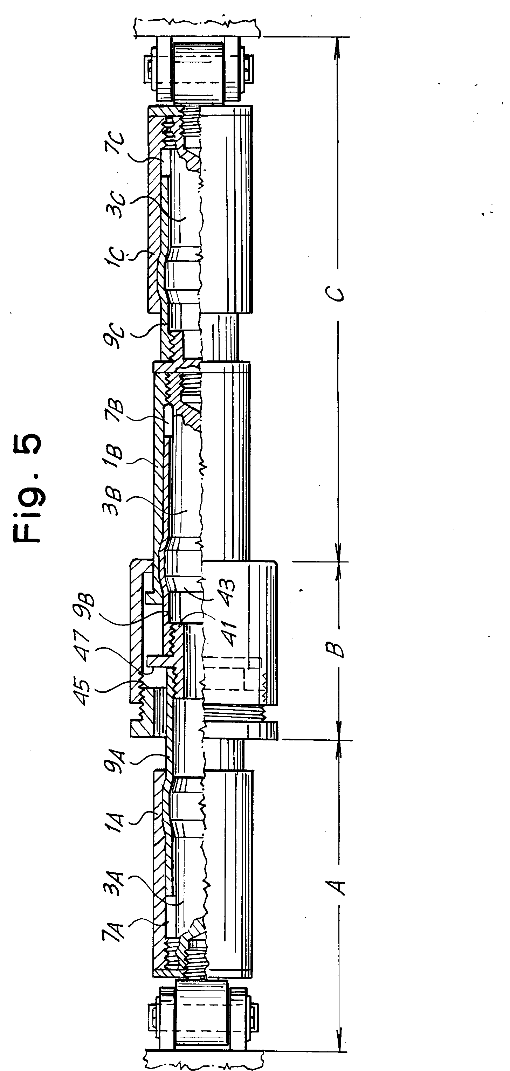

In Fig. 4, a plan view is shown of an arrangement of devices according to the invention, which is particularly suitable for a bridge. 31 indicates the upper surface of a pier, on which the deck of the bridge (not shown) rests. In the pier 31, there is made a cylindrical seat 33, in which a plurality of dissipator devices are accommodated, which are generally indicated by 35 and which are arranged radially around a metal ring 37. The ring 37 is fixed to the deck by means of a trunnion 39. Each device 35 is fixed by means of hinges at one end to the ring 37 and at the other end to the pier. This arrangement makes it possible to obtain the same dynamic behavior in all directions. Conversely, with an appropriate choice of the resistance parameters of the various devices 35, it is possible to obtain a difference response in the different directions.

The device according to the invention can be further improved by arranging in series a number of tubular members with different resistances. In Fig. 5, an embodiment of this type is illustrated, with three tubular members 9A, 9B, 9C arranged in corresponding interspaces 7A, 7B, 7C defined by female elements 1A, 1B, 1C and corresponding male parts 1A, 1B, 1C. A device in three sections A, B, C is thus created. The central section B has a lower resistance so that, in the event of an earthquake of small magnitude, it will be only this section that is to be deformed, providing the structure with a dissipative plastic behavior even in the presence of reduced stresses. When the seismic stress is greater and the tubular member 9B has undergone a complete deformation, defined by suitable stops 41, 43, 45, 47, the tubular members 9A, 9C come into action, which are deformed plastically by greater forces. A dissipator device with gradual behavior is thus obtained, suitable for protecting the structure against earthquakes of different magnitude. The different resistances of the sections A, B, C of the device in Fig. 5 can be obtained by acting either on the dimensions of the respective deformable tubular members 9A, 9B, 9C or (as an alternative or in combination) on the inclination of the frustoconical surfaces inside the respective interspaces.

In an improved embodiment of the invention, the tubular member 9 can have a longitudinally variable mechanical characteristic. For example, it can have a thickness which is variable continuously or discontinuously from an intermediate section toward the ends. If the intermediate section is of smaller thickness and the ends are of greater thickness, the resistance to deformation increases as the deformation increases. On the other hand, if the greater thickness is in the region of the intermediate section, the resistance to deformation (and thus the force transmitted by the device between the two portions of structure connected by said device) decreases as the extent of the deformation increases. With suitable dimensioning of the thickness of the tubular member, it is possible thus to obtain different mechanical characteristics of the device, according to the most varied use requirements.

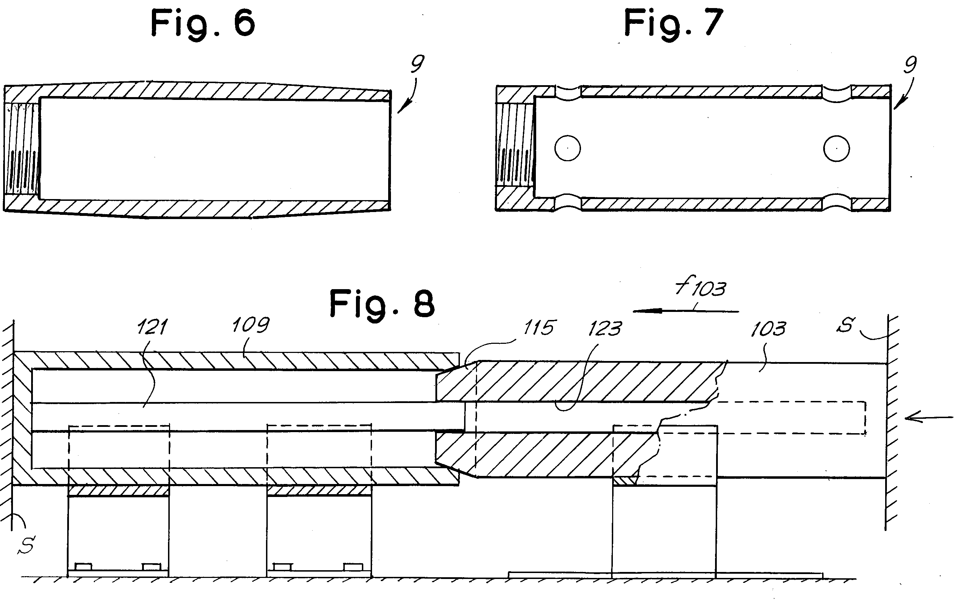

Figs. 6 and 7 diagrammatically show two tubular members 9 which have a particular shape. The tubular member of Fig. 6 has a gradually variable thickness, in order to give a resistance which is variable as a function of the deformation. The tubular member of Fig. 7 achieves the same result with a different means: the thickness of the wall of the tubular member is constant, but is is provided with apertures or slots where the materlal has been cut away. These apertures modify the resistance to deformation along the axial development of the tubular member. This embodiment is particularly suitable for use in the interspace 7.

Fig. 8 very diagrammatically shows an embodiment of the invention which is particularly suitable for the formation of shock absorbing structures. More particularly, the structure of Fig. 8 can be employed e.g. for absorbing the impact in a bumper. In such a case, the device is placed at the end of a rail and becomes active in case of accidental impact of a train against the device itself. The dissipating device is designed in this case to absorb only one shock and not an oscillatory stress, as it is the case in seismic stresses. In this case the deformation takes place only in one direction, and the device is replaced after it has performed iss function once.

According to what is very diagrammatically shown in Fig. 8, the tubular members designated 109 interacts with a male part or plug 103 which has a frusto-conical front portion 115. The tubular member 109 is anchored to a fixed structure S, while the male part 103 is anchored to a movable structure S', e.g. the front portion of a bumper, against which a train impacts in case of a wrong maneuvre. In case an impact occurs, the male part 103 penetrates into the tubular member 109 moving according to arrow f103, thus causing a deformation in the radial direction of said tubular member 109 by means of the frusto-conical portion 115. During its stroke the male part 103 can be guided by a guiding plug 121 which penetrates in an axial hole 123 of male part 103.

A device having a structure similar to that of Fig. 8 can be used each time a device is requested which must absorb kinetic energy in case of shocks or impacts. E.g. devices of this type can be used in lifts or even in vehicles, in order to provide, in the bearing structure thereof, plastically deformable points in order to absorb stresses in case of an accident, thus safeguarding passengers' safety.

## Claims

1. A dissipator device for absorbing dynamic stresses on a structure, comprising means (25, 27) for anchoring said device at a structure (S), and a member (9; 9A, 9B, 9C; 109) capable of being deformed plastically, dissipating energy, when the structure is subjected to dynamic stresses; wherein the deformable member is a tubular member which is movable with respect to a male part or plug (3; 3A, 3B, 3C; 103) which penetrates into said tubular member causing a radial plastic deformation thereof.

2. The device of claim 1, which further comprises a female part (1; 1A, 1B, 1C) which defines, with said male part or plug, an interspace (7; 7A, 7B, 7C) in which the tubular member (9; 9A, 9B, 9C) is inserted.

3. The device as claimed in claim 2, wherein said interspace has two consecutive sections in which the tubular member undergoes two opposite radial plastic deformations,

4. The device as claimed in claim 1, 2 or 3, wherein the tubular element (9) is integral with means (27) for anchoring the device to the structure.

5. The device as claimed in one or more claims 2 to 4, , wherein said male part (3; 3A, 3C) and said female part ( 1; 1A, 1C ) are integral with one another and fixed to means (25) for anchoraging the device to the structure.

6. The device as claimed in one or more claims 2 to 5, wherein said male part (3; 3A, 3B, 3C) has at least one frustoconical surface (15, 17) which interacts with at least one corresponding frustoconical surface (19, 21) of the female part (1; 1A, 1B, 1C) in order to deform the tubular member (9; 9A, 9B, 9C).

7. The device as claimed in one or more of claims 2 to 6, wherein the frustoconical surface (15, 17) of the male part (3; 3A, 3B, 3C) and the corresponding frustoconical surface ( 19, 21 ) of the female part (1; 1A, 1B, 1C ) are staggered axially in relation to one another in such a manner that the area of contact between the tubular member (9; 9A, 9B, 9C) and the frustoconical surface (15, 17) of the male part (3; 3A, 3B, 3C) is axially staggered in relation to the area of contact between the tubular member (9; 9A, 9B, 9C) and the corresponding frustoconical surface (19, 21) of the female part ( 1; 1A, 1B, 1C ).

8.  The device as claimed in one or more of the preceding claims, wherein said tubular member (9; 9A, 9B, 9C) has a variable mechanical resistance along the axial development of the member itself.

9.  The device as claimed in claim 8, wherein said tubular member (9; 9A, 9B, 9C) has a wall of variable thickness along the axial development of the member itself.

10. The device as claimed in claim 8, wherein the tubular member is provided with zones where the material has been cut away, in order to reduce mechanical strength.

11. The device as claimed in claim 1, comprising a guiding plug (121) sliding in a guiding slot (123) in said male part (103).

12. The device as claimed in one or more of the preceding claims, which comprises at least two tubular members (9A, 9B, 9C) which are slidable in at least two corresponding interspaces (7A, 7B, 7C) defined by corresponding male parts (3A, 3B, 3C) and female parts (1A, 1B, 1C), said tubular members having different resistance to deformation.

13. A mechanical or civil structure, which comprises at least one plastic hinge incorporating a device as claimed in one or more of claims 1 to 12

Fig. 1

Fig. 4

Fig. 2

Fig. 3

# Fig. 5

Fig. 6

Fig. 7

Fig. 8

EP 0 477 144 A1

**European Patent Office**

# EUROPEAN SEARCH REPORT

Application Number

EP    91 83 0358

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 366 627 (FIP INDUSTRIALE S.P.A.) | 1-3,6,7, 13 | E04B1/98 F16F7/12 |
| Y | * column 3, line 19 - column 4, line 11; figures 1,2,4,5 * | 4,5,12 | E01D19/00 E04H9/02 |
|  | --- |  |  |
| X | FR-A-1 507 267 (U.T.A.C.) | 1-3,8-10 |  |
| Y | * page 1, column 2, line 3 - line 30 * * page 2, column 1, line 3 - column 2, line 51; figures 1-5 * | 12 |  |
|  | --- |  |  |
| X | GB-A-1 351 735 (YARROW & CO LTD) * page 3, line 16 - line 120; figures 1,4 * | 1,11 |  |
|  | --- |  |  |
| Y | US-A-3 308 908 (JOHN P. BUNN) * column 2, line 34 - column 3, line 14; figures 1-3 * | 4,5 |  |
|  | ----- |  |  |

TECHNICAL FIELDS SEARCHED (Int. Cl.5 )

E04B
F16F

The present search report has been drawn up for all claims

| Place of search | Date of completion of the search | Examiner |
|---|---|---|
| THE HAGUE | 19 DECEMBER 1991 | A. BARBAS |

78 211

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)